# EUROPEAN PATENT APPLICATION

(11) **EP 0 757 995 A1**
(43) Date of publication of application: **12.02.1997**
(21) Application number: 95110693.9
(22) Date of filing: 08.07.1995
(51) Int. Cl.: C08F 10/00, C08F 4/02, C08F 4/60

(54) **Supported polymerization-catalyst and its use for olefine polymerization**

(71) Applicant: PCD-Polymere Gesellschaft m.b.H., A-2323 Schwechat-Mannswörth (AT)
(72) Inventor: The designation of the inventor has not yet been filed
(74) Representative: Kunz, Ekkehard, Dr.

(57) **Abstract**

Supported polymerization catalyst containing the reaction product of
a) a catalyst support based on aluminum oxide, silicon oxide, titanium oxide or zirconium oxide and aluminoxanes and polyfunctional organic crosslinkers and
b) transition metal salts of groups IV to VIII, and optionally Mg-compounds and electron donor compounds.

This catalyst is useful for polymerizing or copolymerizing of olefins.

## Description

### 1. Field of the invention:

This invention relates to a catalyst for the polymerization of olefins, and a process to produce olefin polymers in which the catalyst is used.

### 2. Description of the "PRIOR ART":

This invention deals with new supported catalysts, useful for polymerization of α-olefins:
These supported catalysts permit to achieve stereoregular α-olefine polymers and copolymers with high degree of crystallinity and high molecular weight and to obtain various grades of polyolefines.
It is known that for polymerizing α-olefins, such as propylene and butene-1 to crystalline polymers with high bulk density, stereospecific Ziegler-Natta catalysts are usually used.
In prior art catalysts based on TiCl₃ with no carriers (supports) have been applied.
Publications, literature and many patents have been presented, describing the procedure for preparing Ziegler-Natta catalysts, i.e. catalytic systems obtained by the combination of transition metal compounds of groups IVb to VIII and organometallic compounds of elements of gropus Ia to IIIa of the periodic table, for instance: "Ziegler-Natta Catalysts and polymerizations", John Boor, Jr. Academic Press 1979; GB-1,387,890, describing a catalyst based on a trialkyl-Al compound partially complexed with an electron donor compound and the product obtained by finely grinding a mixture of Mg-dihalide, an electron donor compound and a halogenated Ti-compound; US-4,226,741 and US 4,673,661 improving the above mentioned patent, US 5,310,716 introducing, beside the use of Mg-dihalide, the utilization of inorganic carriers (supports).
Improvements have been achieved by utilizing modified catalysts of Ziegler-Natta type, which contain a titanium compound supported on a carrier, an organoaluminum compound and electron-donor compounds.

The most common carrier described in these and other patents is anhydrous magnesium dichloride, which has been activated with different kinds of treatments. For the manufacture of solid carriers containing magnesium chloride, it has also been proposed to use as the magnesium compound organic magnesium compounds treated with halogenating agents.
Even if efficient catalysts have been described, it has to be underlined that in the heterogeneous catalysts based on magnesium chloride a big amount of chlorine is present. Because ash content removal in the polymer is not provided, there exists the disadvantage that chlorine can cause corrosivity in the equipments during the manufacturing of articles. It was therefore the main aim of the invention to find new catalysts, which do not show these disadvantages and which preferably have also a high bulk density. According to the invention, it has been found that by using a specific support without chlorine together with Ziegler-Natta type catalyst components or catalysts, it is possible to prepare improved solid catalysts or catalyst components which can be used together with cocatalysts and/or electron donors as very effective catalyst systems, useful for polymerization of α-olefins to polyolefins with good morphology, flowability and bulk density, high degree of crystallinity and high molecular weight.

### 3. Description of the invention:

The present invention discloses a new supported polymerization catalyst and a new method for preparation of supported polymerization catalysts or catalyst components by using a crosslinked inorganic oxide carrier material without the typical large content of chlorine. On the basis of an inorganic oxide which is treated with an alumoxane and a polyfunctional organic compound it is possible to produce a crosslinked carrier material with an enlarged surface (EP-A-95/108055). This new type of crosslinked carrier material is used according to the invention for supporting conventional Ziegler-Natta type catalyst components or catalysts. The supported catalyst is able to produce polyolefins, like polypropylene for instance, with high molecular weights, high degrees of crystallinity and good morphologies, e.g. high bulk density.

The present invention accordingly provides a new supported polymerization catalyst containing the reaction product of
a) a catalyst support based on hydrophilic, macroporous, finely divided aluminum oxide, silicon oxide, titanium oxide or zirconium oxide or a mixture or mixed oxide thereof and aluminoxanes, which support is crosslinked by polyfunctional organic crosslinkers and
b) transition metal salts of groups IVb to VIII of the periodic table.

The catalyst support (a) and its preparation is already described in EP-A-95/108055. In EP-A-95/108055 this catalyst support is used togehter with metallocene catalysts, which differ from the Ziegler-Natta catalyst type transition metal salts (b) of this invention mainly in their defined molecular structure containing cyclic hydrocarbon groups like cyclopentadienyl-, indenyl- or fluorenyl-groups, which can form a sandwich structure with a central metal atom. The catalyst support (a) has a very low toluene-soluble aluminoxane content which is preferably from 0.01 to 1.4 mol%, in particular from 0.02 to 1.0 mol%, particularly preferably from 0.04 to 0.08 mol%, based on moles of Al in the aluminoxane used, measured at 70°C.

Suitable hydrophilic, macroporous and finely divided aluminum, silicon, titanium or zirconium oxides in the catalyst support (a) are, for example, oxidic materials prepared in accordance with DE-C 870.242 or US 5,380,687 by the high-temperature hydrolysis process from gaseous metal chlorides or silicon compounds, but also all other hydrophilic oxidic materials having the properties indicated. The mean primary particle size of the finely divided oxides is at most about 100 µm, preferably at most about 10 µm and particularly preferably in the colloidal range, preferably as very finely divided particles at from about 3 to 110 nm. Preference is given to using aluminum oxide C and Aerosil 130 from Degussa.

Suitable aluminoxanes are of the formula I for the linear type: 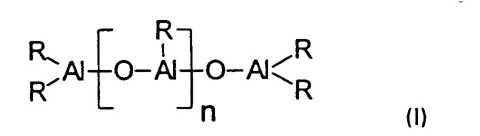 and/or the formula II: 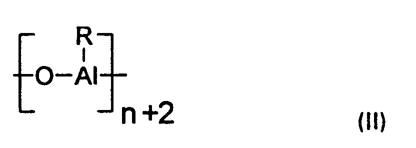 for the cyclic type, where in the formulae I and II the radicals R can be identical or different and are a C₁-C₆-alkyl group and n is an integer from 1-50. Preferably, the radicals R are identical and are methyl, isobutyl, phenyl or benzyl. The aluminoxane can be prepared in various ways according to known processes. One possibility is, for example, the reaction of aluminum alkyls with aluminum sulfate containing water of crystallization (Hoechst EP-A-302424). In the present invention, preference is given to using commercial methylaluminoxane (MAO, from Witco). The molar ratio of aluminum (as aluminoxane) to surface hydroxyl groups is between 1 and 50, preferably between 1 and 20, particularly preferably between 5 and 10.

Suitable polyfunctional organic crosslinkers to be used for the catalyst support (a) are all organic compounds having more than one functional group which can react with a metal-carbon bond. Preference is given to using bifunctional crosslinkers. Such bifunctional organic compounds can be, for example, aliphatic or aromatic diols, aldehydes, dicarboxylic acids, primary or secondary diamines, diepoxide compounds. To avoid interfering side reactions or reaction products, which would necessitate additional purification, preference is given to using aliphatic and aromatic diols, diamines or diepoxide compounds or mixtures thereof. Particular preference is given to butanediol, hexanediol, decanediol, bisphenol A and 1,4-butanediol diglycidyl ether. In these cases, tetrahydrofuran is preferably used as solvent. Trifunctional or higher functional crosslinkers which can be used are, for example, triethanolamine, glycerol or tetraethylenepentamine.

Component (b) of the supported catalyst according to the invention is for instance any Ziegler-Natta catalyst transition metal component, as it is e.g. described in "Ziegler-Natta Catalysts and polymerizations", John Boor, Jr. Academic Press 1979; GB-1,387,890; US-4,226,741; US 4,673,661 and US 5,310,716.

A supported catalyst wherein component (b) is based on transition metal compounds of groups IVb to VIII and on Mg-compounds and optionally electron donor compounds is preferred. Especially preferred are supported catalysts, wherein the catalyst component (b) is based on transition metal salts of groups IVb to VIb, preferably of groups IVb to Vb in the presence of Mg-dihalide and optionally of electron donor compounds. Suitable transition metal compounds are e.g. salts like halides or oxyhalides of Ti, Zr, Hf, V, Nb, Ta, Cr, Mo, Mn, Ni. Such compounds could be e. g. TiCl₃, TiCl₄, HfCl₄, VCl₃, VOCl₃. Mg-halides are preferred as Mg-compounds. If e.g. Mg-alkyls, like Mg-diethyl or Mg-butyloctyl for instance are used, it is preferred to use additional halogenating agents, like SiCl₄ for instance, together with component (b). As electron donor compounds usually any Lewis base can be used, for instance as described in "Ziegler-Natta Catalysts and Polymerizations", John Boor, Academic Press 1979, e.g. diisobutyl phthalate or diisobutyl-dimethoxy propane. Catalyst component (b) can also contain a main group Ia to IIIa metal alkyl or metal haloalkyl as they are described e. g. in the above mentioned book of Boor, examples are e. g. Mg-diethyl, Mg-butyloctyl, Al-trimethyl, Al-triethyl, Al-trihexyl, Al-chlorodiethyl, di-Al-trichlorotriethyl.

The invention further provides a process for preparing a supported polymerization catalyst, wherein
a) a hydrophilic, macroporous, finely divided aluminum oxide, silicon oxide, titanium oxide or zirconium oxide or a mixture or mixed oxide thereof is dried at from 110 to 800°C, subsequently is reacted with an aluminoxane, subsequently is reacted with polyfunctional organic crosslinkers and subsequently
b) is reacted with transition metal salts of groups IVb to VIII of the periodic table and optionally with Mg-compounds and electron donor compounds.

The preparation of the crosslinked carrier (a) is known and was illustrated in EP-A-95/108055. For instance, it is possible to use a hydrophilic, very finely divided alumina, like ALUMINA C (Degussa), without internal surfaces. After calcination at a temperature between 110°C and 800°C, preferably between 200°C and 400°C under nitrogen atmosphere, a solution of alumoxane, like methylalumoxane (30 weight-% in toluene; Fa. Witco), is added dropwise to a stirred suspension of the oxide in an amount sufficient to provide a mole ratio of aluminum (alumoxane) to surface hydroxyl groups (alumina) of from about 50 to 1, preferably about 10 to 5. The suspension mediums used in this step are inert aromatic hydrocarbons, like toluene. The suspension can be stirred for about 10 minutes to about one hour, preferably 30 minutes. Thereafter the suspension medium is removed and the residual solid is dried in vacuo. The crosslinking is performed for instance by reacting this solid with a bi- or morefunctional organic agent, like Bisphenol A (Merck). For this purpose, the solid is suspended again in a solvent, which is also able to dissolve the crosslinking agent, preferably THF (tetrahydrofurane) is used. The solution of Bisphenol A can be added dropwise to this suspension at room temperature and stirred for about 15 minutes to about one hour, favourably for about 15 minutes. Then the solvent is removed in vacuo at a temperature higher then the boiling point of the solvent , for THF preferably at 70°C. Thereafter the solid is suspended and stirred again in toluene. After 5 minutes the solvent can be decanted and the residue is dried in vacuo between 70 and 120°C, favourably at 90°C. The final solid crosslinked carrier or support is a free flowing powder.

The preparation of the solid catalyst component (b) can be carried out according to various known methods, e.g. as described in "Ziegler-Natta Catalysts and Polymerizations", John Boor, Jr. Academic Press 1979; GB-1,387,890; US-4,226,741; US 4,673,661 and US 5,310,716.
For example, the crosslinked carrier (a) is suspended in an aliphatic hydrocarbon with a solution of a magnesium alkyl and a chlorination agent, like SiCl_{4,} then treated one or more times with a large excess of TiCl₄ at temperatures between 80 and 135°C for one or more hours and then washed repeatedly with a hydrocarbon, e.g. hexane until all chlorine ions disappear.
According to another method, the carrier (a) is suspended in a nucleophilic solvent, e.g. THF and mixed with a THF solution of MgCl₂ and TiCl₃. Then the mixture is stirred for 30 minutes or more hours, the solvent is removed in vacuo and thereafter the residue is washed repeatedly with an aliphatic hydrocarbon e.g. n-pentane. Subsequently the catalyst component is dried.
According to another method, the carrier (a) is suspended in an aliphatic hydrocarbon and mixed with a solution of magnesium alkyl and an electron donor, solved in heptane, stirred at least 30 minutes and dried in vacuo. Thereafter the solid is clorinated with an excess of e.g. SiCl₄. After repeatedly washing with a hydrocarbon solvent, the residue is dried and then treated with a large excess of TiCl₄. Subsequently the suspension is washed again repeatedly with a hydrocarbon and dried in vacuo.
In another example, the crosslinked carrier (a) is chlorinated with e.g. SiCl₄, after stirring for at least 30 minutes, the excess is decanted and the residue is washed with a hydrocarbon and dried in vacuo. Then the solid is treated for at least 1 to 24 hours with a solution of MgCl₂ and an electron donor, e.g. diisobutyl phthalate, with e.g. ethyl acetate as a solvent, thereafter the solvent is removed in vacuo. The molar ratio MgCl₂/donor used in the reaction is generally between 50:1 and 4:1, preferably 40:1 and 30:1. Then the solid can be mixed with a large excess of TiCl₄, this mixture is stirred at 120°C for at least 30 minutes. Then a donor like diisobutyl phthalate is added dropwise in the same molar ratio as indicated above for Mg/donor. After washing and drying the solid is again treated with TiCl₄ at 80°C, therafter the residue is washed with n-pentane to eliminate all traces of unreacted TiCl₄ and dried in vacuo.

The obtained solid catalysts can further be reacted with a metal alkyl or haloalkyl of main groups I a to IIIa of the periodic table e.g. with Al-alkyl compounds. The molar ratios between Al and Ti are generally between 1000 and 1.

The supported catalysts according to the invention can be used for polymerizing or copolymerizing olefines in a process for preparing polyolefins. Accordingly, the invention is further concerned to the use of a supported catalyst according to the invention for polymerizing or copolymerizing olefins in the manufacture of polyolefins, and to a process for preparing polyolefins by polymerization or copolymerization of olefins, wherein a supported catalyst according to the invention is used as polymerization catalyst.

It is advantageous to use metal alkyls or metal haloalkyls of main groups Ia to IIIa of the periodic table and optionally electron donor compounds as additional cocatalysts during the polymerization. Especially in the case of catalysts for the stereoregular polymerization of olefins, in particular of propylene, it is convenient to use together with e. g. an Al-alkyl compound an electron donor selected e.g. from the groups of silicon compounds containing at least one Si-OR bond wherein R is a hydrocarbyl group. Examples of such compounds are:
(cyclohexyl)₂ Si(OCH₃)₂, (isopropyl)₂Si(OCH₃)₂ or cyclohexyl methyl Si(OCH₃)₂. The molar ratio between Al and donor is usually between 5:1 and 100:1.

The supported catalyst of the invention can be introduced into the polymerization mixture either as a powder or as a suspension in an inert hydrocarbon, for example pentane, hexane, cyclohexane or mineral oils.
The polymerization can be carried out in a known manner in solution, suspension or gas-phase processes, continuously or batchwise at a temperature of from -10 to +200°C, preferably from +20 to +80°C.
It is found to be advantageous during the polymerization to use metal alkyls of group Ia to IIIa, preferably aluminum alkyls, particularly preferably trimethylaluminum, triethylaluminum or triisobutylaluminum, or alkylaluminoxanes, for example methylaluminoxane, and optionally electron donor compounds, as scavenger and as additional activator. This is especially advantageous in the case, when the catalyst component (b) itself does not contain internal cocatalysts or optionally internal electron donors. The amount used is, based on the aluminum, 50-5,000 mole, preferably 100-500 mole, per mole of transition metal in the catalyst.
Polymerization or copolymerization is carried out on olefins of the formula R^{a}-CH=CH-R^{b}. In this formula, R^{a} and R^{b} are identical or different and are each a hydrogen atom or an alkyl radical having from 1 to 20 carbon atoms. However, R^{a} and R^{b} can also form a ring together with the carbon atoms connecting them. For example, olefins such as ethylene, propylene, 1-butene, 1-hexene, 4-methyl-1-pentene, 1-octene, cyclopentene, norbornene or norbornadiene are polymerized or copolymerized. Preference is given to polymerizing or copolymerizing ethylene, propylene and butene, particularly preferably ethylene and propylene.

If required, hydrogen is added as molecular weight regulator. The total pressure of the polymerization is usually 0.5-150 bar. Preference is given to carrying out the polymerization in the pressure range of 1-40 bar.
If the polymerization is carried out as a suspension or solution polymerization, an inert solvent is used. For example, aliphatic or cycloaliphatic hydrocarbons such as pentane, hexane or cyclohexane can be used. It is also possible to use toluene. Preference is given to carrying out the polymerization in the liquid monomer.
The copolymerization of ethylene with propylene is preferably carried out in liquid propylene or in hexane as suspension medium. In the polymerization in liquid propylene, the ethylene is preferably fed in such an amount that a partial pressure ratio p_{C3}/p_{C2} > 0.5, in particular > 1.0, is established above the liquid phase (p_{C2} = partial pressure of ethylene in the gas phase above the suspension; p_{C3} = partial pressure of the propylene in the gas phase above the suspension). In the copolymerization in hexane as suspension medium, an ethylene/propylene gas mixture having a propylene content of from 1 to 50 mol%, preferably from 5 to 30 mol%, is added. The total pressure is kept constant during the polymerization by metering in further amounts. The total pressure is from 0.5 to 40 bar, preferably from 1 to 20 bar. The polymerization time is from 10 minutes to 6 hours, preferably from 30 minutes to 2 hours.
The catalysts used according to the invention make possible the preparation of homopolymers, copolymers and block copolymers. The particular advantage of the catalyst of the invention is that especially its chlorine content is extremely low and that the-bulk densitiy of the polymers is very high.
Further advantages are derived from the preparation technology. The catalyst is able to be prepared in principle by a "single-vessel process", where, with an appropriate reaction procedure, no interfering byproducts are formed and the solvents used can be recycled.

### 4. Examples:

All preparations were carried out in a glove box under dry nitrogen atmosphere conditions.

### I. Preparation of the crosslinked carrier:

10 g Alumina C (from Degussa) are calcinated at 400°C for 4 h under nitrogen atmosphere. A solution of methylaluminoxane (30 weigth-% in toluene; 69,7 mmol Al; 14,36g MAO; MAO from Witco) is slowly added to a suspension of 7,04g dried Al₂O₃ (0,99 mmol OH/g Al₂O₃) in 120 ml toluene. The reaction mixture is stirred for 30 min. After drying under vacuum the resulted solid is suspended in 70 ml of THF. To this suspension is added a solution of Bisphenol A (6,27 mmol; 1,43 g Bisphenol A solved in 10 ml THF) dropwise and stirred for 45 min at room temperature. Then the solvent is removed at 50°C under vacuum. The solid carrier is again suspended with 100 ml toluene, stirred 5 min and subsequently the solvent is decanted. After these procedure the solid part is dried i. vac. at 90°C. The final solid carrier is a free flowing powder.

### II.) Preparation of the supported catalyst:

### Catalyst component A:

A suspension of 3 g crosslinked carrier from example I) and 20 ml THF is mixed dropwise with a solution of 0,77 g MgCl₂, 0,39 g TiCl₃ and 50 ml THF in a 250 ml glass flask equiped with a mechanical stirrer, reflux cooler and a thermometer. The mixture is stirred for 30 min at room temperature. Thereafter the solvent is removed by evorporating in vacuo at room temperature, the solid is thoroughly washed four times with n-pentane, separated by filtration and dried again in vacuo at room temperature.
The Ti-content is shown in table 1.

### Catalyst component B)

A solution of 7,22 g magnesium butyl octyl [20 w-% solution in n-heptane] and 1,78g SiCl₄ are added dropwise to a suspension of 3 g crosslinked carrier I) in 20 ml n-hexane and stirred for 60 min at room temperature. After drying in vacuo the obtained solid is mixed with 20 ml of TiCl₄ and strirred for 2h at 90°C. The large excess of TiCl₄ is separated by filtration, the residue is carefully washed three times with n-hexane, filtrated and subsequently dried in vacuo at room temperature.
The Ti-content is shown in table 1.

### Catalyst component C)

A solution of 6,61 g magnesium butyl octyl [20 w-% solution in n-heptane] and 0,17 g (0,79 mmol) 2,2 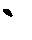 -diisobutyl-1,3-dimethoxypropan is added dropwise to a suspension of 3,2 g carrier I) and 20 ml n-pentane, and stirred for 30 minutes. Thereafter the solvent is evaporated in vacuo at room temperature. The resulted solid is mixed with 40 ml SiCl₄ and stirred for further 30 min. The excess of SiCl₄ is separated by filtration, the residue is carefully washed two times with n-pentane, filtrated and dried in vacuo at room temperature. Subsequently the treated carrier is mixed with 40 ml TiCl_{4,} the suspension is slowly heated to 90°C and kept for 1 hour at the temperature. Then the hot liquid is filtrated, the mixture is cooled to room temperature and washed thoroughly with n-pentane. At last the residue is dried in vacuo at room temperature.
The Ti-content is shown in table 1.

### Catalyst component D)

3,2 g carrier I) and 40 ml SiCl₄ are stirred for 30 min. The excess of SiCl₄ is decanted, the residue is carefully washed three times with n-pentane and dried in vacuo. Thereafter a solution of 0,74 g MgCl₂ and 130 ml ethyl acetate is suspended to the treated carrier, then 56 mg diisobutyl phthalate ( molar ratio: Mg: D = 40) are added dropwise to the suspension and stirred for 24 hours. Finally the solvent is removed in vacuo at room temperature.
The solid is mixed with 40 ml TiCl₄ and slowly heated up to 120°C. Then 53 mg diisobutyl phthalate are added dropwise and stirred for 30 minutes at 120°C. Thereafter the hot liquid is filtrated, the residue is cooled to room temperature and washed thoroughly with n-pentane and dried in vacuo at room temperature. Subsequently the solid is added again with 40 ml TiCl₄ and stirred for 1 hour at 80°C. At last the large excess of TiCl₄ is decanted and the residue washed with pentan four times and dried in vacuo. The obtained solid is a free flowing redbrown powder.
The Ti-content is shown in table 1.

### Catalyst component E)

40 ml TiCl₄ are added to 1 g of the crosslinked carrier I), the suspension is slowly heated to 90°C, kept at the temperature and stirred for 1 hour. Thereafter the excess of TiCl₄ is decanted and the residue is cooled and carefully washed with n-pentane. Finally the solid is dried in vacuo at room temperature. The obtained catalyst component is a free flowing brown powder.
The Ti-content is shown in table 1.

### III.) Polymerization examples

### Polymerization A1)

A solution of 6,4 ml triethylaluminum [1,011 molar in n-hexane; TEAL] is mixed with 1 ml of donor C (cyclohexyl methyl dimethoxysilane CHM; molar ratio Al: D = 20) and stirred for 5 minutes. Then the mixture is introduced in a catalyst feeder filled with 90 mg of catalyst component A ( molar ratio Al : Ti = 167). The catalyst feeder is screwed on the top of the dry propylene flushed 2 liter reactor (Fa. Büchi). Thereafter the cooled reactor is filled with 200 g liquid propylene. After a residence time of 5 minutes the catalyst is subsequently introduced into the reactor with further 300 g propylene, and the polymerization system is heated to the polymerization temperature of 70°C within 10 minutes and kept at this temperature. After the polymerization time of 2 hours the propylene pressure in the reactor is flashed and the polypropylene is removed. After drying in vacuo, 2,1 g polypropylene granules are obtained.
Results and properties are shown in table 1.

### Polymerization A2)

The polymerization is carried out as in example A1), with the difference that 204 mg of catalyst component A) are reacted with 14,4 ml TEAL and 2,1 ml CHM. Furthermore
5 l H₂ are introduced with pressure during the polymerization.
Vacuum drying of the product gives 14 g of polypropylene. Characteristics are shown in table 1.

### Polymerization B1)

The polymerization is carried out as in example A1), with the difference that 52 mg of catalyst component B) are reacted with 13,3 ml TEAL and 2,0 ml CHM.
Vacuum drying of the product gives 9,3 g of polypropylene grains. Characteristics are shown in table 1.

### Polymerization B2)

The polymerization is carried out as in example B1), with the difference that 48 mg of catalyst component B) are reacted with 12,3 ml TEAL and 3,6 ml CHM ( molar ratio Al: D = 10).
Vacuum drying of the product gives 4,6 g of polypropylene grains. Characteristics are shown in table 1.

### Polymerization C1)

The polymerization is carried out as in example A1), with the difference that 93 mg of catalyst component C) are reacted with 13,8 ml TEAL and 2,1 ml CHM.
After drying in vacuo, 79 g polypropylene grains having a density of 0,22 g/cm³ remain. Further polymer results are shown in table 1.

### Polymerization C2)

The polymerization is carried out as in example C1), with the difference that 44 mg of catalyst component C) are reacted with 6,5 ml TEAL and 1,0 ml CHM. Furthermore
5 l H₂ are introduced with pressure during the polymerization.
After drying in vacuo, 72 g polypropylene grains having a density of 0,35 g/cm³ are obtained. Further polymer results are shown in table 1.

### Polymerization D1)

The polymerization is carried out as in example A1), with the difference that 68 mg of catalyst component D) are reacted with 12,6 ml TEAL and 1,9 ml CHM.
Vacuum drying of the product gives 101 g of polypropylene grains with a density of 0,2 g/cm³. Characteristics are shown in table 1.

### Polymerization D2)

The polymerization is carried out as in example D1), with the difference that 32 mg of catalyst component D) are reacted with 5,9 ml TEAL and 0,9 ml CHM. Furthermore
5 l H₂ are introduced with pressure during the polymerization.
After drying in vacuo, 95 g polypropylene grains having a density of 0,3 g/cm³ are obtained. Further polymer results are shown in table 1.

### Polymerization D3)

A solution of 13,5 ml triethylaluminum [1,011 molar in n-hexane; TEAL] is mixed with 2,1 ml of donor C (cyclohexyl methyl dimethoxysilane CHM; molar ratio Al : D = 20) and stirred for 5 minutes. Then the mixture is introduced in a catalyst feeder filled with 89 mg of catalyst component D ( molar ratio Al : Ti = 167). The catalyst feeder is screwed on the top of the dry nitrogen flushed 2 liter reactor (Fa. Büchi). After a residence time of 5 minutes the catalyst is subsequently introduced into the reactor with 1 liter n-hexane, and the polymerization system is heated to the polymerization temperature of 70°C within 10 minutes and kept at this temperature. The nitrogen excess pressure is flashed to 0,4 bar and then ethylene is introduced. The ethylene pressure is increased to 5 bar and kept constant at 70°C over 2 hours. After the polymerization time of 2 hours the ethylene pressure in the reactor is released and the polyethylene is removed. After drying in vacuo, 93 g polyethylene grains are obtained.
Results are shown in table 1.

### Polymerization E1)

The polymerization is carried out as in example A1), with the difference that 200 mg of catalyst component E) are reacted with 16,2 ml TEAL and 2,8 ml CHM.
After drying in vacuo, 6 g polypropylene grains are obtained. Further polymer results are shown in table 1.

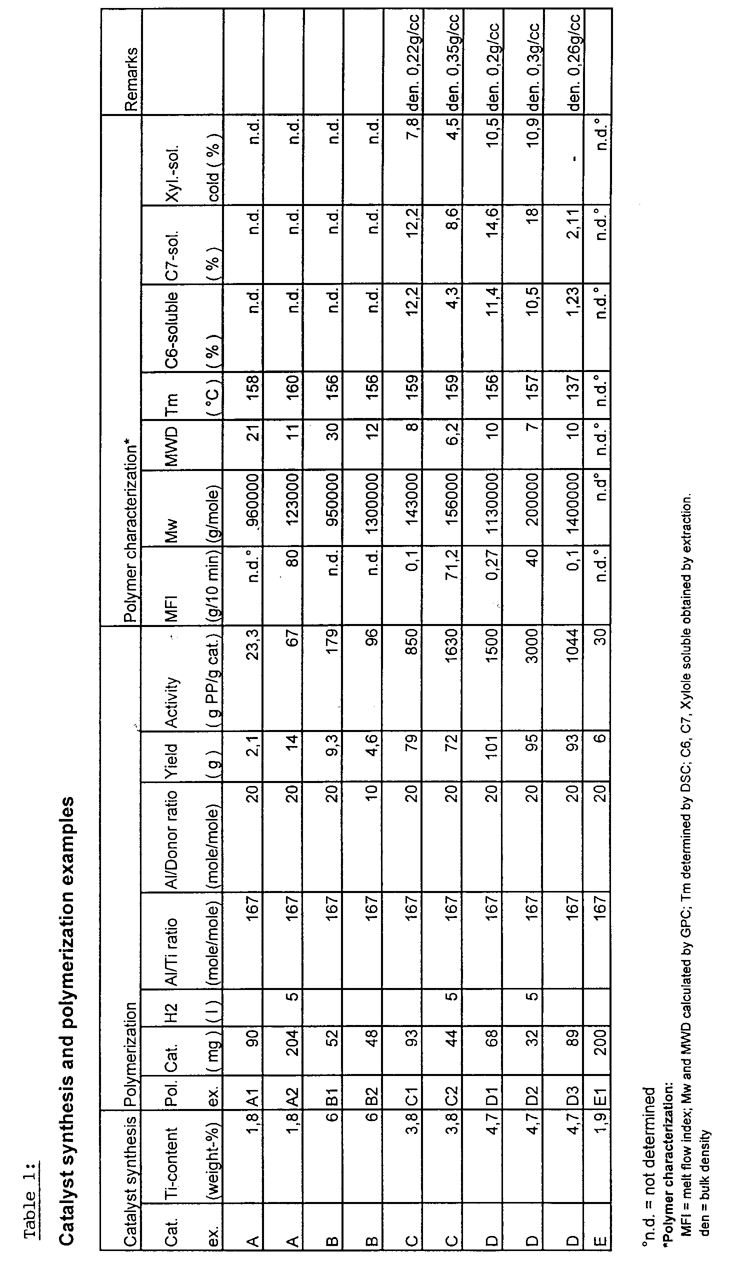

## Claims

1. Supported polymerization catalyst containing the reaction product of
a) a catalyst support based on hydrophilic, macroporous, finely divided aluminum oxide, silicon oxide, titanium oxide or zirconium oxide or a mixture or mixed oxide thereof and aluminoxanes, which support is crosslinked by polyfunctional organic crosslinkers and
b) transition metal salts of groups IVb to VIII of the periodic table.

2. Supported catalyst as claimed in claim 1, wherein the catalyst support has a toluene-soluble proportion of aluminoxane of from 0.01 to 1.4 mol%, particularly preferably from 0.04 to 0.08 mol%, based on moles of Al in the aluminoxane used.

3. Supported catalyst as claimed in claim 1 or 2, wherein the catalyst support is cross inked by bifunctional organic crosslinkers.

4. Supported catalyst as claimed in any of claims 1 to 3, wherein the catalyst support is crosslinked by diols, diamines or diepoxide compounds or mixtures thereof.

5. Supported catalyst as claimed in any of claims 1 to 4, wherein the catalyst component (b) is based on transition metal salts of groups IVb to VIII and Mg-compounds and optionally electron donor compounds.

6. Supported catalyst as claimed in claim 5, wherein the catalyst component (b) is based on transition metal salts of groups IVb to VIb, preferably of groups IVb to Vb, in the presence of Mg-dihalide and optionally of electron donor compounds.

7. Process for preparing a supported polymerisation catalyst, wherein
a) a hydrophilic, macroporous, finely divided aluminum oxide, silicon oxide, titanium oxide or zirconium oxide or a mixture or mixed oxide thereof is dried at from 110 to 800°C, subsequently is reacted with an aluminoxane, subsequently is reacted with polyfunctional organic crosslinkers and subsequently
b) is reacted with transition metal salts of groups IVb to VIII of the periodic table and optionally with Mg-compounds and electron donor compounds.

8. Use of a supported catalyst as claimed in any of claims 1 to 7, for polymerizing or copolymerizing olefins in the manufacture of polyolefins.

9. Process for preparing polyolefins by polymerisation or copolymerization of olefins, wherein a supported catalyst as claimed in any of claims 1 to 7 is used as polymerization catalyst.

10. Process for preparing polyolefins as claimed in claim 9, wherein metal alkyls of groups Ia to IIIa and optionally electron donor compounds are additionally used in the polymerization.
